# EUROPÄISCHE PATENTSCHRIFT

(11) **EP 3 088 235 B1**
(45) Veröffentlichungstag und Bekanntmachung des Hinweises auf die Patenterteilung: **27.09.2023**
(21) Anmeldenummer: 16167022.9
(22) Anmeldetag: 26.04.2016
(51) Int. Cl.: B60L 1/00, H02J 1/14

(54) **ENERGIEMANAGEMENTSYSTEM FÜR EINE LANDWIRTSCHAFTLICHE FAHRZEUGANORDNUNG**
ENERGY MANAGEMENT SYSTEM FOR AN AGRICULTURAL VEHICLE ASSEMBLY
SYSTEME DE GESTION D'ENERGIE POUR UN SYSTEME DE VEHICULE AGRICOLE

(30) Priorität: 29.04.2015 DE 102015207965
(43) Veröffentlichungstag der Anmeldung: 02.11.2016
(73) Patentinhaber: Deere & Company, Moline, IL 61265 (US)
(72) Erfinder: Fritz Dr., Norbert, 68549 Ilvesheim (DE); Böhm Dr., Barbara, 69115 Heidelberg (DE); Gugel, Rainer, 68723 Plankstadt (DE); Münch Dr., Philipp, 67663 Kaiserslautern (DE); Regenauer, John W, Denver, Iowa 50622 (US)
(74) Vertreter: Dehnhardt, Florian Christopher

(56) Entgegenhaltungen:
- EP-A1- 2 293 405
- EP-A1- 2 551 140
- DE-A1- 10 347 684
- DE-A1- 19 857 916
- DE-A1-102005 060 129
- DE-T5-112008 003 179
- JP-A- 2004 242 558
- US-A1- 2012 181 095

## Beschreibung

Die Erfindung betrifft ein Energiemanagementsystem für eine landwirtschaftliche Fahrzeuganordnung, mit einer elektrischen Energieversorgungseinheit zur Versorgung einer Vielzahl elektrischer Verbraucher mit elektrischer Energie, einer Verbrauchsüberwachungseinheit zur Ermittlung eines von einem aktuellen Betriebszustand der elektrischen Verbraucher abhängigen elektrischen Gesamtenergiebedarfs, wobei die Verbrauchsüberwachungseinheit eine Abschätzung des seitens der elektrischen Energieversorgungseinheit zur Verfügung stehenden elektrischen Energieangebots vornimmt und mit dem ermittelten elektrischen Gesamtenergiebedarf vergleicht, um bei Überschreiten des zur Verfügung stehenden elektrischen Energieangebots seitens des ermittelten Gesamtenergiebedarfs die Versorgung der elektrischen Verbraucher mit elektrischer Energie in Abhängigkeit zugeordneter Versorgungsprioritäten zu reduzieren.

Ein derartiges System in Gestalt einer Vorrichtung zur Steuerung von elektrischen Verbrauchern diverser Fahrzeugkomponenten bzw. Fahrzeugfunktionen geht aus der DE 198 57 916 A1 hervor. Jeder der elektrischen Verbraucher fordert elektrische Leistung bei einem zugehörigen Verbrauchskoordinator an. Der Verbrauchskoordinator ordnet den elektrischen Verbrauchern jeweilige Prioritätsstufen zu. Ein Fahrzeugkoordinator vergleicht die Leistungsanforderungen mit einem Leistungsbereitstellungspotential eines Fahrzeugbordnetzes. Abhängig vom Vergleichsergebnis gibt der Fahrzeugkoordinator Aufträge zur Leistungsabnahme an den Verbrauchskoordinator aus. Übersteigen die Leistungsanforderungen das Leistungsbereitstellungspotential des Fahrzeugbordnetzes und damit die zur Verfügung stehende Leistung, so wird diese auf die elektrischen Verbraucher der höchsten Prioritätsstufe aufgeteilt.

Elektrischen Verbrauchern mit niedriger Prioritätsstufe wird dementsprechend keine oder lediglich eine reduzierte Leistung zugeteilt.

Die Prioritätsstufen ändern sich dynamisch mit dem Betriebszustand des elektrischen Verbrauchers. So wechselt ein leistungsreduziert betriebener elektrischer Verbraucher in eine höhere Prioritätsstufe, sobald eine aufgrund des leistungsreduzierten Betriebs verursachte Funktionsänderung, beispielsweise aufgrund einer eingeschränkten Klimatisierung bzw. Lüftung eines Fahrzeuginnenraums, für einen Benutzer nachteilig spürbar wird.

Eine weitergehende Beachtung möglicherweise auftretender Beeinträchtigungen von mit den leistungsreduziert betriebenen elektrischen Verbrauchern assoziierten Fahrzeugaggregaten erfolgt nicht.

DE 11 2008 003179 T5 offenbart ein Energiemanagementsystem für eine Fahrzeuganordnung, wobei Versorgungsprioritäten einer Vielzahl elektrischer Verbraucher, darunter Kühlsysteme, zugewiesen werden. DE 103 47 684 A1 offenbart ein Energiemanagementsystem für eine Fahrzeuganordnung, wobei die Versorgungsprioritäten der Gruppen der Verbraucher dynamisch angepasst werden.

Es ist daher Aufgabe der vorliegenden Erfindung, ein Energiemanagementsystem der eingangs genannten Art im Hinblick auf eine erhöhte Betriebssicherheit von mit elektrischen Verbrauchern assoziierten Fahrzeugaggregaten weiterzubilden.

Diese Aufgabe wird durch ein Energiemanagementsystem mit den Merkmalen des Patentanspruchs 1 gelöst.

Das Energiemanagementsystem für eine landwirtschaftliche Fahrzeuganordnung umfasst eine elektrische Energieversorgungseinheit zur Versorgung einer Vielzahl elektrischer Verbraucher mit elektrischer Energie, eine Verbrauchsüberwachungseinheit zur Ermittlung eines von einem aktuellen Betriebszustand der elektrischen Verbraucher abhängigen elektrischen Gesamtenergiebedarfs, wobei die Verbrauchsüberwachungseinheit eine Abschätzung des seitens der elektrischen Energieversorgungseinheit zur Verfügung stehenden elektrischen Energieangebots vornimmt und mit dem ermittelten elektrischen Gesamtenergiebedarf vergleicht, um bei Überschreiten des zur Verfügung stehenden elektrischen Energieangebots seitens des ermittelten Gesamtenergiebedarfs die Versorgung der elektrischen Verbraucher mit elektrischer Energie in Abhängigkeit zugeordneter Versorgungsprioritäten zu reduzieren. Erfindungsgemäß nimmt die Verbrauchsüberwachungseinheit eine dynamische Anpassung der Versorgungsprioritäten in Abhängigkeit eines sich ändernden Kühlbedarfs eines mittels wenigstens eines der elektrischen Verbraucher gekühlten Fahrzeugaggregats vor.

Die Erfindung trägt dem Umstand Rechnung, dass die Betriebssicherheit der meisten Fahrzeugaggregate maßgebend von einer ausreichenden Kühlung abhängt, wobei diese zunehmend mittels elektrisch betriebener Kühlkreisläufe, Lüfter, oder dergleichen erfolgt. Eine unzureichende Kühlung bleibt für den Benutzer in aller Regel bis zum irreversiblen Ausfall des betreffenden Fahrzeugaggregats unbemerkt. Die Betriebssicherheit lässt sich daher durch Berücksichtigung des sich ändernden Kühlbedarfs derartiger Fahrzeugaggregate maßgeblich erhöhen.

Die Bestimmung des Kühlbedarfs erfolgt im einfachsten Fall mittels herkömmlicher Temperatursensoren, wobei aus den von den Temperatursensoren bereitgestellten Sensorsignalen zugehörige Temperaturistwerte abgeleitet werden. Die Temperaturistwerte lassen sich mit mehreren vorgegebenen Temperaturschwellenwerten entsprechend unterschiedlicher Eskalationsstufen eines zunehmenden Kühlungsdefizits des Fahrzeugaggregats vergleichen, wobei beim Überschreiten der Temperaturschwellenwerte die Priorität des zu seiner Kühlung vorgesehenen elektrischen Verbrauchers schrittweise erhöht wird. Auf diese Weise wird gewährleistet, dass der zur ausreichenden Kühlung des Fahrzeugaggregats erforderliche elektrische Energiebedarf des elektrischen Verbrauchers zumindest weitgehend gedeckt wird. Um das insgesamt zur Verfügung stehende elektrische Energieangebot einzuhalten, nimmt die Verbrauchsüberwachungseinheit zugleich eine Reduzierung des elektrischen Gesamtenergiebedarfs durch Abstufung der Versorgungsprioritäten einer oder mehrerer der übrigen elektrischen Verbraucher vor.

Bei der Fahrzeuganordnung kann es sich um ein aus einem landwirtschaftlichen Traktor sowie einem landwirtschaftlichen Anbaugerät bestehendes Fahrzeuggespann handeln, wobei die von dem Energiemanagementsystem umfassten elektrischen Verbraucher sowohl dem landwirtschaftlichen Traktor wie auch dem landwirtschaftlichen Anbaugerät zugeordnet sein können und unter anderem der Durchführung diverser landwirtschaftlicher Bearbeitungsfunktionen bzw. der Bereitstellung eines Fahrantriebs dienen. Im Falle eines automatisierten Anbaugerätebetriebs kann die Ansteuerung der betreffenden elektrischen Verbraucher auf Grundlage eines ISOBUS Klasse 3 Protokolls erfolgen, wobei eine verteilte Steuergerätearchitektur vorgesehen sein kann, bei der die landwirtschaftlichen Bearbeitungsfunktionen seitens des landwirtschaftlichen Anbaugeräts, ein von diesem umfasster Fahrantrieb jedoch von Seiten des landwirtschaftlichen Traktors automatisiert gesteuert wird. Daneben können weitere elektrische Verbraucher vorhanden sein, die diversen anderen Funktionen des Fahrzeuggespanns zugeordnet sind.

Typischerweise werden die elektrischen Verbraucher in mehrere Verbrauchergruppen gleicher Versorgungspriorität unterteilt.

Für den Fall des vorstehend beschriebenen Fahrzeuggespanns können die folgenden Kategorien vorgesehen sein, wobei diese lediglich der Veranschaulichung dienen und keinen Anspruch auf Vollständigkeit erheben:

### Versorgungspriorität 1 - Fahrzeugkernfunktionen

Sicherheitsrelevante Fahrzeugfunktionen, die der Aufrechterhaltung von Brems-, Lenk- und Getriebefunktionen des landwirtschaftlichen Traktors bzw. Anbaugeräts dienen, einschließlich solcher, die elektrische betätigte Kupplungs-, Betriebsbrems- oder Parkbremseinrichtungen betreffen.

### Versorgungspriorität 2 - Landwirtschaftliche Bearbeitungsfunktionen

Elektrische Verbraucher zur Durchführung landwirtschaftlicher Bearbeitungsfunktionen, insbesondere elektrisch betriebene Kreiselschwader, Wurfscheibenantriebe, Säeinheiten und Saatgebläse, sowie ferner elektrische Beleuchtungseinrichtungen zur Arbeitsumfeldbeleuchtung. Diese Funktionen weisen eine vergleichsweise hohe Priorität auf, da die Einhaltung einer gleichbleibenden Produktivität bzw. Prozessgeschwindigkeit landwirtschaftlicher Bearbeitungsfunktionen für gewerbliche Nutzer von besonderer Bedeutung ist.

### Versorgungspriorität 3 - Fahrantriebe

Elektrische Radantriebe des landwirtschaftlichen Anbaugeräts, insbesondere radindividuell oder achsweise vorgesehene elektrische Antriebsmotoren. Im Falle einer Reduzierung der Fahrgeschwindigkeit des Fahrzeuggespanns erfolgt gegebenenfalls eine entsprechende Anpassung der Prozessgeschwindigkeit von zugleich ausgeführten landwirtschaftlichen Bearbeitungsfunktionen.

### Versorgungspriorität 4 - Komfortfunktionen

Elektrisch betriebene Fahrzeugaggregate zur Kabinenklimatisierung des landwirtschaftlichen Traktors, Unterhaltungselektronik, elektrische Innenbeleuchtung.

### Versorgungspriorität 5 - Hilfsfunktionen

Elektrische Verbraucher zur Kühlung von Fahrzeugaggregaten, einschließlich elektrisch betriebener Lüfter und Kühlkreisläufe. Heiz- und Kühlaggregate zur Erntegutkonditionierung.

Aufgrund des vergleichsweise trägen Temperaturverhaltens der meisten gekühlten Fahrzeugaggregate kann die Versorgung der zur Kühlung vorgesehenen elektrischen Verbraucher der fünften Versorgungspriorität mit elektrischer Energie zugunsten höher priorisierter Funktionen vorübergehend eingeschränkt werden. Insofern weisen die zugeordneten Hilfsfunktionen grundsätzlich die niedrigste Versorgungspriorität auf, solange die Betriebssicherheit der betreffenden Fahrzeugaggregate aufgrund der verminderten Kühlung nicht gefährdet ist. Andernfalls erfolgt zur Vermeidung von Hitzeschäden eine schrittweise Erhöhung der Versorgungspriorität in der vorstehend beschriebenen Art und Weise.

Es sei angemerkt, dass es sich anstelle eines aus einem landwirtschaftlichen Traktor bzw. Anbaugerät bestehenden Fahrzeuggespanns auch um eine beliebige andere landwirtschaftliche Fahrzeuganordnung handeln kann, so zum Beispiel um eine Erntemaschine, einen Feldhäcksler, ein selbstfahrendes Spritzgerät, oder dergleichen.

Vorteilhafte Ausführungen des erfindungsgemäßen Energiemanagementsystems gehen aus den Unteransprüchen hervor.

Vorzugsweise reduziert die Verbrauchsüberwachungseinheit die Versorgung mit elektrischer Energie für sämtliche elektrische Verbraucher einer bestimmten Versorgungspriorität proportional zu ihrer elektrischen Nennleistung, mithin ihrer für den Dauerbetrieb zulässigen Maximalleistung. In Relation zueinander erfolgt die Reduzierung der elektrischen Versorgung daher für jeden der elektrischen Verbraucher einer bestimmten Versorgungspriorität in gleichem Maße. Eine Benachteiligung einzelner elektrischer Verbraucher wird so vermieden.

Im einfachsten Falle kann die Verbrauchsüberwachungseinheit die Versorgung mit elektrischer Energie für sämtliche elektrische Verbraucher einer bestimmten Versorgungspriorität unterbrechen. Dies erfolgt durch Abschalten des betreffenden elektrischen Verbrauchers, beispielsweise indem die Verbrauchsüberwachungseinheit über eine ISOBUS-Schnittstelle einen Abschaltbefehl an eine dem elektrischen Verbraucher zugeordnete Steuereinheit sendet.

Des Weiteren besteht die Möglichkeit, dass eine Reduzierung der Versorgung mit elektrischer Energie insbesondere bei elektrischen Verbrauchern mit oberster Versorgungspriorität unterbleibt. Hierzu zählen elektrische Verbraucher, die sicherheitsrelevanten Fahrzeugkernfunktionen zugeordnet sind und deren Betrieb unter allen Umständen aufrechterhalten werden muss.

Um eine mögliche Beeinträchtigung der durch die elektrischen Verbraucher ausgeführten Funktionen so gering wie möglich zu halten, ist es denkbar, dass eine Reduzierung der Versorgung mit elektrischer Energie nur insoweit bzw. solange erfolgt als dies zur Einhaltung des zur Verfügung stehenden elektrischen Energieangebots tatsächlich erforderlich ist.

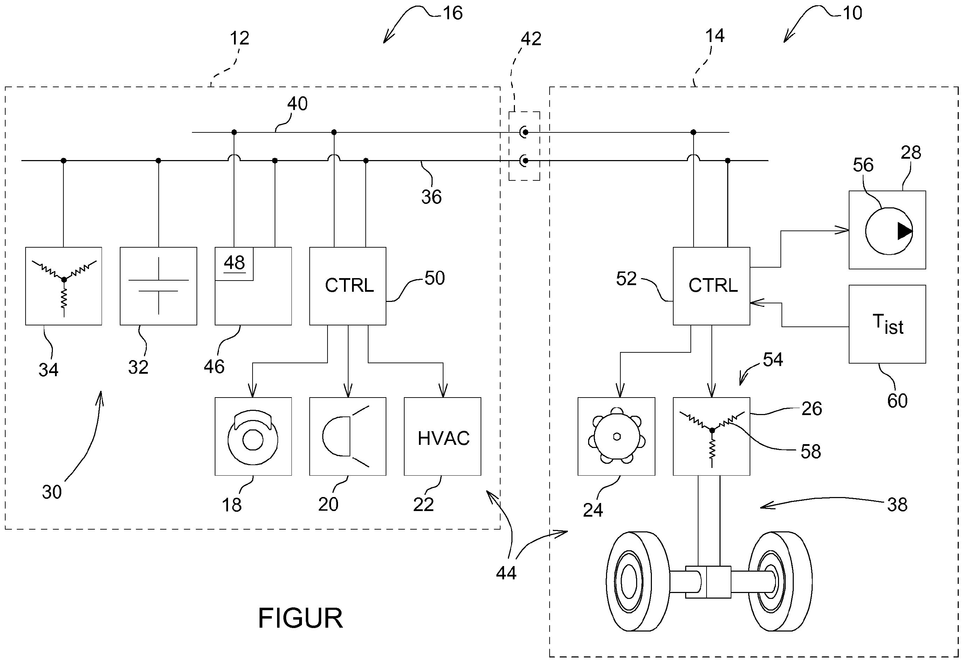

Das erfindungsgemäße Energiemanagementsystem wird im Folgenden anhand der beigefügten Zeichnung näher erläutert. Die einzige Figur zeigt eine beispielhafte Ausführungsform des erfindungsgemäßen Energiemanagementsystems für eine landwirtschaftliche Fahrzeuganordnung.

Bei der lediglich schematisch dargestellten landwirtschaftlichen Fahrzeuganordnung 10 handelt es sich beispielsgemäß um ein aus einem landwirtschaftlichen Traktor 12 sowie einem daran angebrachten landwirtschaftlichen Anbaugerät 14 bestehendes Fahrzeuggespann 16. Sowohl der landwirtschaftliche Traktor 12 als auch das landwirtschaftliche Anbaugerät 14, bei dem es sich vorliegend um einen elektrisch angetriebenen Heuladewagen handelt, weisen diverse elektrische Verbraucher 18, 20, 22, 24, 26, 28 auf, die aus einem Energieversorgungseinheit 30 des landwirtschaftlichen Traktors 12, genauer gesagt aus einem mittels einer Fahrzeugbatterie 32 bzw. eines Generators 34 gespeisten Gleichstrombordnetzes 36 mit elektrischer Energie versorgt werden.

Im vorliegenden Fall ist das Fahrzeuggespann 16 zur Durchführung eines automatisierten Anbaugerätebetriebs ausgelegt, sodass zumindest ein Teil der elektrischen Verbraucher 18, 20, 22, 24, 26, 28 der Durchführung landwirtschaftlicher Bearbeitungsfunktionen des landwirtschaftlichen Anbaugeräts 14 bzw. der Bereitstellung eines von diesem umfassten elektrischen Fahrantriebs 38 dient. Die Ansteuerung der betreffenden elektrischen Verbraucher erfolgt in diesem Fall auf Grundlage eines ISOBUS Klasse 3 Protokolls, wobei eine verteilte sowie über ein ISOBUS-Datennetzwerk 40 vernetzte Steuergerätearchitektur vorgesehen ist, bei der die landwirtschaftlichen Bearbeitungsfunktionen seitens des landwirtschaftlichen Anbaugeräts 14, der elektrische Fahrantrieb 38 jedoch von Seiten des landwirtschaftlichen Traktors 12 automatisiert gesteuert wird. ISOBUS-Datennetzwerk 40 und Gleichstrombordnetz 36 sind demnach in Teilabschnitte aufgeteilt, wobei die beiden Teilabschnitte über einen standardisierten ISOBUS-Steckverbinder 42 miteinander kommunizieren.

Die elektrischen Verbraucher 18, 20, 22, 24, 26, 28 sind in mehrere Verbrauchergruppen gleicher Versorgungspriorität unterteilt, wobei für den Fall des vorstehend beschriebenen Fahrzeuggespanns 16 die folgenden Kategorien vorgesehen sind:

### Versorgungspriorität 1 - Fahrzeugkernfunktionen

Sicherheitsrelevante Fahrzeugfunktionen, die der Aufrechterhaltung von Brems-, Lenk- und Getriebefunktionen des landwirtschaftlichen Traktors 12 bzw. des landwirtschaftlichen Anbaugeräts 14 dienen, einschließlich solcher, die elektrische betätigte Kupplungs-, Betriebsbrems- oder Parkbremseinrichtungen betreffen. Diese werden vorliegend durch den elektrischen Verbraucher 18 repräsentiert.

### Versorgungspriorität 2 - Landwirtschaftliche Bearbeitungsfunktionen

Elektrische Verbraucher zur Durchführung landwirtschaftlicher Bearbeitungsfunktionen, vorliegend eines elektrischen Antriebs zur Aufnahme von zu verladendem Erntegut, sowie ferner elektrische Beleuchtungseinrichtungen zur Arbeitsumfeldbeleuchtung. Diese werden vorliegend durch die beiden elektrischen Verbraucher 20, 24 repräsentiert.

### Versorgungspriorität 3 - Fahrantriebe

Elektrische Fahrantriebe des landwirtschaftlichen Anbaugeräts 14, insbesondere radindividuell oder achsweise vorgesehene elektrische Antriebsmotoren. Diese werden vorliegend durch den elektrischen Verbraucher 26 repräsentiert. Im Falle einer Reduzierung der Fahrgeschwindigkeit erfolgt gegebenenfalls eine entsprechende Anpassung der Prozessgeschwindigkeit von zugleich ausgeführten landwirtschaftlichen Bearbeitungsfunktionen der zweiten Versorgungspriorität.

### Versorgungspriorität 4 - Komfortfunktionen

Elektrisch betriebene Komponenten zur Kabinenklimatisierung des landwirtschaftlichen Traktors 12, Unterhaltungselektronik, elektrische Innenbeleuchtung. Diese werden vorliegend durch den Verbraucher 22 repräsentiert.

### Versorgungspriorität 5 - Hilfsfunktionen

Elektrische Verbraucher zur Kühlung von Fahrzeugaggregaten, einschließlich elektrisch betriebener Lüfter und Kühlkreisläufe. Diese werden vorliegend durch den elektrischen Verbraucher 28 repräsentiert.

Das in der landwirtschaftlichen Fahrzeuganordnung 10 untergebrachte Energiemanagementsystem 44 umfasst eine Verbrauchsüberwachungseinheit 46 zur Ermittlung eines von einem aktuellen Betriebszustand der elektrischen Verbraucher 18, 20, 22, 24, 26, 28 abhängigen elektrischen Gesamtenergiebedarfs. Der aktuelle Betriebszustand wird aus jeweils zugehörigen Steuerbefehlen abgeleitet, die die Verbrauchsüberwachungseinheit 46 über eine interne ISOBUS-Schnittstelle 48 am ISOBUS-Datennetzwerk 40 abgreift. Die Verbrauchsüberwachungseinheit 46 nimmt eine Abschätzung des seitens der elektrischen Energieversorgungseinheit 30 zur Verfügung stehenden elektrischen Energieangebots vor und vergleicht dieses mit dem ermittelten elektrischen Gesamtenergiebedarf. Erkennt die Verbrauchsüberwachungseinheit 46, dass der ermittelte Gesamtenergiebedarfs das zur Verfügung stehende elektrische Energieangebot überschreitet, so reduziert diese die Versorgung der elektrischen Verbraucher 20, 22, 24, 26, 28 mit elektrischer Energie in Abhängigkeit der jeweils zugeordneten Versorgungsprioritäten, und zwar beginnend mit der Verbrauchergruppe mit der niedrigsten Versorgungspriorität.

Die Verbrauchsüberwachungseinheit 46 reduziert die Versorgung mit elektrischer Energie für sämtliche elektrische Verbraucher 20, 22, 24, 26, 28 einer bestimmten Versorgungspriorität proportional zu ihrer elektrischen Nennleistung, mithin ihrer für den Dauerbetrieb zulässigen Maximalleistung. Die Reduzierung erfolgt dabei nur insoweit bzw. solange als dies zur Einhaltung des zur Verfügung stehenden elektrischen Energieangebots tatsächlich erforderlich ist.

Alternativ unterbricht die Verbrauchsüberwachungseinheit 46 die Versorgung mit elektrischer Energie für sämtliche elektrische Verbraucher 20, 22, 24, 26, 28 einer bestimmten Versorgungspriorität. Dies erfolgt durch Abschalten des betreffenden elektrischen Verbrauchers 20, 22, 24, 26, 28. Hierzu sendet die Verbrauchsüberwachungseinheit 46 über die ISOBUS-Schnittstelle 48 einen Abschaltbefehl an eine dem elektrischen Verbraucher 20, 22, 24, 26, 28 jeweils zugeordnete Steuereinheit 50, 52.

Eine Reduzierung der Versorgung mit elektrischer Energie unterbleibt im Falle des elektrischen Verbrauchers 18, da dieser der Verbrauchergruppe der ersten Versorgungspriorität und damit sicherheitsrelevanten Fahrzeugkernfunktionen angehört, deren Betrieb unter allen Umständen aufrechterhalten werden muss.

Zusätzlich nimmt die Verbrauchsüberwachungseinheit 46 eine dynamische Anpassung der Versorgungsprioritäten in Abhängigkeit eines sich ändernden Kühlbedarfs eines mittels des elektrischen Verbrauchers 28 gekühlten Fahrzeugaggregats 54 vor. Bei dem elektrischen Verbraucher 28 handelt es sich beispielhaft um einen mittels einer elektrischen Kühlmittelpumpe 56 betriebenen Kühlkreislauf zur Kühlung des von dem Fahrzeugaggregat 54 umfassten elektrischen Verbrauchers 26. Letzterer ist als elektrischer Antriebsmotor 58 ausgebildet und Bestandteil des elektrischen Fahrantriebs 38 des landwirtschaftlichen Anbaugeräts 14.

Ein Temperatursensor 60 erfasst den Kühlbedarf des elektrischer Antriebsmotors 58. Aus den von dem Temperatursensor 60 bereitgestellten Sensorsignalen leitet die Verbrauchsüberwachungseinheit 46 einen zugehörigen Temperaturistwert Tᵢₛₜ ab. Der Temperaturistwert Tᵢₛₜ wird von der Verbrauchsüberwachungseinheit 46 mit mehreren vorgegebenen Temperaturschwellenwerten Tₘₐₓ₁, Tₘₐₓ₂, Tₘₐₓ₃ entsprechend unterschiedlicher Eskalationsstufen eines zunehmenden Kühlungsdefizits des elektrischer Antriebsmotors 58 verglichen, wobei beim Überschreiten der Temperaturschwellenwerte Tₘₐₓ₁, Tₘₐₓ₂, Tₘₐₓ₃ die Versorgungspriorität des elektrischen Antriebsmotors 58 schrittweise erhöht wird. Dies erfolgt im vorliegendem Fall nach folgendem Schema:
**1. Eskalationsstufe:** Tᵢₛₜ > Tₘₐₓ₁, dann Prio 5 -> Prio 4
**2. Eskalationsstufe:** Tᵢₛₜ > Tₘₐₓ₂ > Tₘₐₓ₁, dann Prio 4 -> Prio 3
**3. Eskalationsstufe:** Tᵢₛₜ > Tₘₐₓ₃ > Tₘₐₓ₂, dann Prio 3 -> Prio 2

Um das insgesamt zur Verfügung stehende elektrische Energieangebot einzuhalten, nimmt die Verbrauchsüberwachungseinheit 46 zugleich eine Reduzierung des elektrischen Gesamtenergiebedarfs durch Abstufung der Versorgungsprioritäten einer oder mehrerer der übrigen elektrischen Verbraucher 20, 22, 24, 26 vor.

Im Ergebnis kann eine unzureichende Kühlung des elektrischen Antriebsmotors 58 rechtzeitig erkannt sowie durch Erhöhung der Versorgungspriorität der elektrischen Kühlmittelpumpe 56 kompensiert werden. Der in der Figur dargestellte elektrische Antriebsmotor 58 dient dabei lediglich der Veranschaulichung, vielmehr kann es sich auch um ein beliebiges anderes Fahrzeugaggregat 54 handeln, das durch Verwendung elektrischer Einrichtungen, wie eines elektrisch betriebenen Lüfters oder Kühlkreislaufs, gekühlt wird.

## Patentansprüche

1. Energiemanagementsystem für eine landwirtschaftliche Fahrzeuganordnung, mit einer elektrischen Energieversorgungseinheit (30) zur Versorgung einer Vielzahl elektrischer Verbraucher (18, 20, 22, 24, 26, 28) mit elektrischer Energie, einer Verbrauchsüberwachungseinheit (46) zur Ermittlung eines von einem aktuellen Betriebszustand der elektrischen Verbraucher (18, 20, 22, 24, 26, 28) abhängigen elektrischen Gesamtenergiebedarfs, wobei die Verbrauchsüberwachungseinheit (46) eine Abschätzung des seitens der elektrischen Energieversorgungseinheit (30) zur Verfügung stehenden elektrischen Energieangebots vornimmt und mit dem ermittelten elektrischen Gesamtenergiebedarf vergleicht, um bei Überschreiten des zur Verfügung stehenden elektrischen Energieangebots seitens des ermittelten Gesamtenergiebedarfs die Versorgung der elektrischen Verbraucher (20, 22, 24, 26, 28) mit elektrischer Energie in Abhängigkeit zugeordneter Versorgungsprioritäten zu reduzieren, **dadurch gekennzeichnet, dass** die Verbrauchsüberwachungseinheit (46) eine dynamische Anpassung der Versorgungsprioritäten in Abhängigkeit eines sich ändernden Kühlbedarfs eines mittels wenigstens eines der elektrischen Verbraucher (28) gekühlten Fahrzeugaggregats (54) dahingehend vornimmt, dass zugleich zur Einhaltung des insgesamt zur Verfügung stehenden elektrischen Energieangebots der elektrische Gesamtenergiebedarf durch Abstufung der Versorgungsprioritäten einer oder mehrerer der übrigen elektrischen Verbraucher (18, 20, 22, 24, 26) reduziert wird.

2. Energieversorgungssystem nach Anspruch 1, **dadurch gekennzeichnet, dass** die Verbrauchsüberwachungseinheit (46) die Versorgung mit elektrischer Energie für sämtliche elektrische Verbraucher (20, 22, 24, 26, 28) einer bestimmten Versorgungspriorität proportional zu ihrer elektrischen Nennleistung reduziert.

3. Energieversorgungssystem nach wenigstens einem der Ansprüche 1 bis 2, **dadurch gekennzeichnet, dass** die Verbrauchsüberwachungseinheit (46) die Versorgung mit elektrischer Energie für sämtliche elektrische Verbraucher (20, 22, 24, 26, 28) einer bestimmten Versorgungspriorität unterbricht.

4. Energieversorgungssystem nach wenigstens einem der Ansprüche 1 bis 3, **dadurch gekennzeichnet, dass** eine Reduzierung der Versorgung mit elektrischer Energie bei elektrischen Verbrauchern (18) mit oberster Versorgungspriorität unterbleibt.

5. Energieversorgungssystem nach wenigstens einem der Ansprüche 1 bis 4, **dadurch gekennzeichnet, dass** eine Reduzierung der Versorgung mit elektrischer Energie nur insoweit erfolgt als dies zur Einhaltung des zur Verfügung stehenden elektrischen Energieangebots erforderlich ist.

6. Landwirtschaftliche Fahrzeuganordnung, mit einem Energiemanagementsystem (44) nach wenigstens einem der Ansprüche 1 bis 5.

## Claims

1. Energy management system for an agricultural vehicle arrangement, having an electrical energy supply unit (30) for supplying electrical energy to a multiplicity of electrical loads (18, 20, 22, 24, 26, 28), a consumption monitoring unit (46) for determining a total electrical energy requirement that is dependent on a current operating state of the electrical loads (18, 20, 22, 24, 26, 28), wherein the consumption monitoring unit (46) estimates the electrical energy supply available from the electrical energy supply unit (30) and compares it with the determined total electrical energy requirement in order to reduce the supply of electrical energy to the electrical loads (20, 22, 24, 26, 28) on the basis of assigned supply priorities if the available electrical energy supply is exceeded by the determined total energy requirement, **characterized in that** the consumption monitoring unit (46) dynamically adapts the supply priorities on the basis of a changing cooling requirement of a vehicle assembly (54) cooled by means of at least one of the electrical loads (28) to the effect that, in order to simultaneously comply with the electrical energy supply that is available overall, the total electrical energy requirement is reduced by downgrading the supply priorities of one or more of the other electrical loads (18, 20, 22, 24, 26) .

2. Energy supply system according to Claim 1, **characterized in that** the consumption monitoring unit (46) reduces the supply of electrical energy for all electrical loads (20, 22, 24, 26, 28) of a particular supply priority in a manner proportional to their electrical nominal power.

3. Energy supply system according to at least one of Claims 1 to 2, **characterized in that** the consumption monitoring unit (46) interrupts the supply of electrical energy for all electrical loads (20, 22, 24, 26, 28) of a particular supply priority.

4. Energy supply system according to at least one of Claims 1 to 3, **characterized in that** the supply of electrical energy is not reduced for electrical loads (18) with the highest supply priority.

5. Energy supply system according to at least one of Claims 1 to 4, **characterized in that** the supply of electrical energy is reduced only to the extent that is needed to comply with the available electrical energy supply.

6. Agricultural vehicle arrangement having an energy management system (44) according to at least one of Claims 1 to 5.

## Revendications

1. Système de gestion d'énergie pour un ensemble de véhicule agricole, comprenant une unité d'alimentation en énergie électrique (30) pour l'alimentation en énergie électrique d'une pluralité de consommateurs électriques (18, 20, 22, 24, 26, 28), une unité de surveillance de consommation (46) pour établir une demande en énergie électrique totale, dépendant d'un état de fonctionnement actuel des consommateurs électriques (18, 20, 22, 24, 26, 28), dans lequel l'unité de surveillance de consommation (46) procède à une estimation de l'offre en énergie électrique disponible du côté de l'unité d'alimentation en énergie électrique (30) et la compare avec la demande en énergie électrique totale établie afin de réduire, en cas de dépassement de l'offre en énergie électrique disponible par la demande en énergie totale établie, l'alimentation en énergie électrique des consommateurs électriques (20, 22, 24, 26, 28) en fonction de priorités d'alimentation associées,
**caractérisé en ce que** l'unité de surveillance de consommation (46) procède à une adaptation dynamique des priorités d'alimentation en fonction d'une demande de refroidissement variable d'un agrégat de véhicule (54) refroidi au moyen d'au moins l'un des consommateurs électriques (28) en ce sens qu'en même temps, pour le maintien de l'offre en énergie électrique disponible au total, la demande en énergie électrique totale est réduite par un classement des priorités d'alimentation d'un ou de plusieurs des consommateurs électriques restants (18, 20, 22, 24, 26) .

2. Système d'alimentation en énergie selon la revendication 1, **caractérisé en ce que** l'unité de surveillance de consommation (46) réduit l'alimentation en énergie électrique pour tous les consommateurs électriques (20, 22, 24, 26, 28) d'une priorité d'alimentation déterminée proportionnellement à leur puissance électrique nominale.

3. Système d'alimentation en énergie selon au moins l'une des revendications 1 à 2, **caractérisé en ce que** l'unité de surveillance de consommation (46) coupe l'alimentation en énergie électrique pour tous les consommateurs électriques (20, 22, 24, 26, 28) d'une priorité d'alimentation déterminée.

4. Système d'alimentation en énergie selon au moins l'une des revendications 1 à 3, **caractérisé en ce qu'**une réduction de l'alimentation en énergie électrique est omise pour des consommateurs électriques (18) de la plus haute priorité d'alimentation.

5. Système d'alimentation en énergie selon au moins l'une des revendications 1 à 4, **caractérisé en ce qu'**une réduction de l'alimentation en énergie électrique n'est effectuée que dans la mesure où elle est nécessaire au maintien de l'offre en énergie électrique disponible.

6. Ensemble de véhicule agricole, comprenant un système de gestion d'énergie (44) selon au moins l'une des revendications 1 à 5.
